# FASCICULE DE BREVET EUROPEEN

(11) **EP 3 942 169 B1**
(45) Date de publication et mention de la délivrance du brevet: **08.02.2023**
(21) Numéro de dépôt: 20710966.1
(22) Date de dépôt: 18.03.2020
(51) Int. Cl.: F02C 7/32, F02C 9/18

(54) **PRÉLÈVEMENT DE PUISSANCE SUR CORPS BP ET SYSTÈME D'ÉVACUATION DE DÉBRIS**
LEISTUNGSABNAHME VON EINEM ND-KÖRPER UND SYSTEM ZUM ENTFERNEN VON RÜCKSTÄNDEN
POWER TAKE-OFF FROM A LP BODY AND SYSTEM FOR REMOVING DEBRIS

(30) Priorité: 18.03.2019 FR 1902732
(43) Date de publication de la demande: 26.01.2022
(73) Titulaire: SAFRAN AIRCRAFT ENGINES, 75015 Paris (FR)
(72) Inventeur: DE BLOIS, Nicolas, Bertrand, Georges, 77550 Moissy-Cramayel (FR); DUPAYS, Clément, 77550 Moissy-Cramayel (FR)
(74) Mandataire: Regimbeau
(86) Numéro de dépôt international: PCT/EP2020/057497
(87) Numéro de publication internationale: WO 2020/188000

(56) Documents cités:
- EP-A1- 2 623 750
- WO-A1-2016/020618
- FR-A1- 2 659 690
- FR-A1- 2 983 911

## Description

### DOMAINE TECHNIQUE GENERAL

L'invention concerne les turbomachines double-flux et multi-corps, notamment double ou triple corps, pour aéronef, et plus spécifiquement la gestion des marges au pompage (*surge margin* en anglais) au niveau des compresseurs.

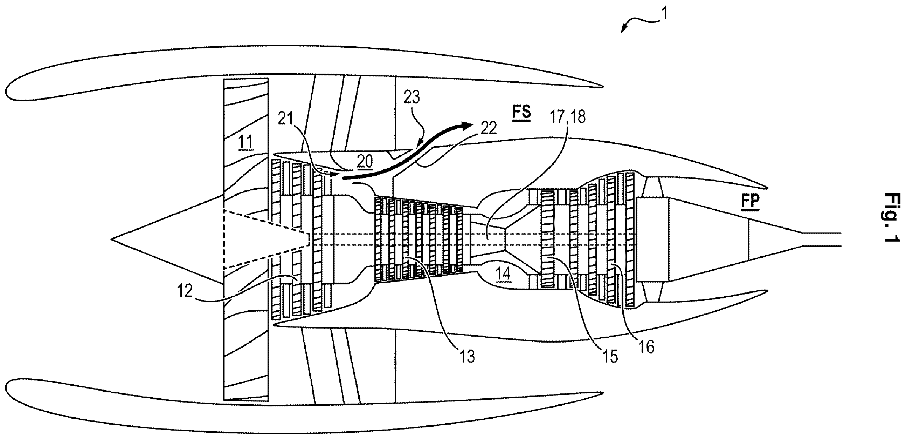

En référence à la **figure 1**, dans une turbomachine 10 double-flux, une soufflante 11 prélève un flux d'air qui est divisé en deux : un flux secondaire FS qui est accéléré par la soufflante 11 et qui fournit la majorité de la poussée et un flux primaire FP, qui traverse plusieurs compresseurs 12, 13, avant d'entrer dans une chambre de combustion 14 et de traverser plusieurs turbines 15, 16, qui entrainent notamment la soufflante 11. On parle respectivement de veine secondaire et de veine primaire.

Par exemple, dans une turbomachine 10 double-flux et double corps, la veine primaire comprend plus spécifiquement au moins deux étages de compression 12, 13 et turbine 15, 16. On a ainsi dans le sens d'écoulement du fluide : un compresseur basse pression 12 (aussi appelé *booster*), un compresseur haute pression 13, la chambre de combustion 14, une turbine haute pression 15, une turbine basse pression 16. Un arbre 17 dit haute pression relie les éléments haute pression 13, 15 et un arbre 18 dit basse pression relie les éléments basse pression 12, 16. Les arbres 17, 18 sont concentriques.

On utilisera les sigles BP et HP pour basse pression et haute pression.

Ces deux arbres 17, 18 ne tournent en général pas à la même vitesse. De plus, ils n'ont pas la même inertie. Par conséquent, notamment dans les phases de ralentissement, le compresseur BP 12 (on parle de régime N1) ralentit plus lentement que le compresseur HP 13 (on parle de régime N2), à cause en partie de leur inertie différente. On obtient alors une situation où le compresseur BP 12 comprime plus d'air que le compresseur HP 13 ne peut recevoir. Cette situation crée un risque de pompage dans la zone du booster (compresseur BP 12). Ce phénomène correspond à des fluctuations importantes et rapides de la pression en aval du compresseur concerné. Un pompage une fois amorcé peut conduire à une extinction de la chambre de combustion. Il génère en outre des à-coups importants sur les aubages du compresseur et peut ainsi conduire à des dégradations mécaniques.

On définit la marge au pompage comme l'écart de pression minimal à respecter entre la ligne de fonctionnement du compresseur basse pression (booster) et la ligne de pompage qui délimite le champ du risque de pompage.

### ETAT DE L'ART

Pour pallier le risque de pompage, notamment en zone de compresseur BP 12, il est connu d'utiliser des vannes de décharges 20 permettant d'évacuer un trop plein de pression en sortie d'un compresseur. Elles permettent de faire migrer la ligne de fonctionnement du compresseur BP 12. Ces vannes sont désignées généralement désignées par leur acronyme anglais VBV (pour *Variable Bleed Valves*).

Elles comprennent une ouverture 21 débouchant dans la veine primaire, une veine de décharge 22 pour transférer l'air, et une sortie 23 débouchant dans la veine secondaire. L'ouverture 21 a généralement la forme d'une écope ou d'un clapet ouvrable et refermable. Les documents WO2016156739 et FR2983911 par exemple décrivent des VBV.

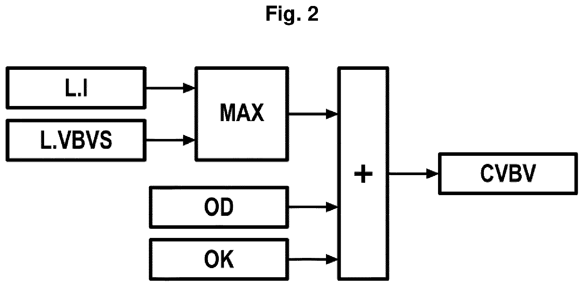

La **figure 2** illustre un synoptique de fonctionnement d'un système comprenant au moins une VBV, que nous appelons ici « système VBV », activé lorsqu'une consigne CVBV est générée.

Le système VBV est prévu pour s'activer selon différentes conditions. Une première condition est définie par une loi VBV stabilisée LVBVs, c'est-à-dire pour évacuer une surpression constante à un point de régime donné via l'ouverture des VBV. La loi LVBVs se définit par f(N 1 ; N2 ; Pression ; Mach), où N1 est le régime de l'arbre BP et N2 est le régime de l'arbre HP.

Cette condition est combinée à un offset de consigne OK en ouverture/fermeture des VBV en fonction du comportement des VSV (Variable Stator Vanes) venant s'appliquer sur la consigne en stabilisé. L'offset de consigne se définit par f(gradient_VSV).

Cette condition est aussi combinée à un offset de biais de décélération OD de l'arbre BP, défini par f(dN1/dt).

A chaque ralentissement, un risque de pompage intervient et les VBV sont activées. Même en phase de croisière, on observe une utilisation importante des VBV du fait de différents paramètres (dont la régulation moteur, la dynamique des VSV, etc...). Par conséquent, du fait de leurs activations répétées, les VBV 20 s'usent rapidement.

Par ailleurs, de manière générale les VBV permettent d'évacuer vers la veine secondaire des débris, c'est-à-dire des objets étrangers à la turbomachine qui peuvent avoir été ingérés dans la veine primaire du moteur par l'entrée du compresseur basse pression, protégeant ainsi la chambre de combustion. Elles sont utilisées en particulier pour assurer l'évacuation de la grêle ou de l'eau ingérée par la veine primaire du moteur.

Une deuxième condition d'ouverture des VBV est ainsi définie par une loi d'ingestion LI grêle/eau, qui commande la pleine ouverture des VBV sur la base d'une loi liée aux conditions du domaine de vol, notamment la pression, la température, le régime moteur.

Cette double utilisation a complexifié le développement des VBV, et une activation trop fréquente du système VBV entraîne son usure prématurée, obligeant à le surdimensionner pour limiter cette usure.

Il est également connu la demande de brevet français référence FR2 659 690 qui concerne des moteurs à combustion interne et plus particulièrement des moteurs à turbine à gaz qui sont utilisés pour la propulsion des avions. Dans un mode de réalisation particulier, cette demande de brevet présente un procédé et un dispositif qui permettent l'enlèvement et l'expulsion de matières étrangères, telles que de la glace et des débris, de la voie d'écoulement primaire ou voie d'écoulement de coeur de moteur.

Également le document WO2016/020618 décrit différentes solutions de couplage résistif d'un générateur pour ralentir le compresseur BP.

### PRESENTATION DE L'INVENTION

Pour résoudre les problèmes précités, l'invention propose une turbomachine double-flux avec une veine primaire et une veine secondaire, arrangée radialement externe à la veine primaire, ladite turbomachine comprenant :
- un corps basse pression comprenant un compresseur basse pression relié à une turbine basse pression via un arbre basse pression,
- un corps haute pression comprenant un compresseur haute pression relié une turbine haute pression, via un arbre haute pression,
- un système de prélèvement de puissance basse-pression comprenant un générateur électrique, configuré pour prélever de la puissance sur le corps basse pression,
dans lequel
- la turbomachine comprend un système d'évacuation de débris, situé entre les deux compresseurs,
- le système de prélèvement de puissance basse pression est configuré pour prélever de la puissance sur l'arbre basse pression à l'aide du couple résistif du générateur électrique, sur consigne de prélèvement d'un calculateur, afin de faire ralentir le compresseur basse pression et éviter un risque de pompage entre le compresseur haute pression et le compresseur basse pression.

Le système d'évacuation de débris comprend une porte située entre les deux compresseurs.

Dans un mode de réalisation, le système d'évacuation de débris est configuré pour être activé lors de l'ingestion de grêle ou d'eau, sur consigne d'un calculateur.

Dans un mode de réalisation, la turbomachine comprend en outre un dispositif de détection de débris configuré pour détecter la présence de débris entre les deux compresseurs, dans laquelle le système d'évacuation de débris est configuré pour n'être activé que si le dispositif de détection de débris détecte un débris, sur consigne d'activation d'un calculateur.

Dans un mode de réalisation, le prélèvement de puissance est configuré pour être contrôlé en fonction des régimes du compresseur basse pression et du compresseur haute pression, sur consigne d'un calculateur.

Dans un mode de réalisation, le calculateur contrôle le prélèvement de puissance en fonction des variations instantanées des régimes du compresseur basse pression et du compresseur haute pression.

Dans un mode de réalisation, le système d'évacuation de débris comprend au moins une porte adaptée pour être ouverte en tout ou rien.

Dans un mode de réalisation, le système d'évacuation de débris est configuré pour être commandé en tout ou rien, sur consigne d'un calculateur.

Dans un mode de réalisation, la turbomachine comprend un calculateur dédié, distinct d'un calculateur principal de la turbomachine, configuré pour contrôler le prélèvement de puissance en fonction des variations instantanées des régimes du compresseur basse pression et du compresseur haute pression, sur consigne du calculateur principal.

Dans un mode de réalisation, le système d'évacuation de débris est configuré pour être commandé en tout ou rien, sur consigne d'un calculateur, en cas d'échec à préserver la marge au pompage à travers le système de prélèvement de puissance basse pression, afin d'évacuer une surpression entre le compresseur basse pression et le compresseur haute pression.

L'invention propose aussi un ensemble comprenant une turbomachine telle que décrite précédemment et un calculateur. Le calculateur peut être embarqué sur la turbomachine, comme un FADEC, par exemple monté dans un compartiment d'une nacelle de la turbomachine, mais pourrait également être logé hors du périmètre de la turbomachine, par exemple dans un pylône ou dans le fuselage de l'aéronef.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
La figure 1 représente une turbomachine.
La figure 2 représente un synoptique du fonctionnement d'un VBV selon l'art antérieur.
La figure 3 représente une vue schématique d'une turbomachine selon un mode de réalisation de l'invention.
La figure 4 représente un synoptique du fonctionnement d'un mode de réalisation d'une turbomachine selon un mode de réalisation de l'invention.

### DESCRIPTION DETAILLEE

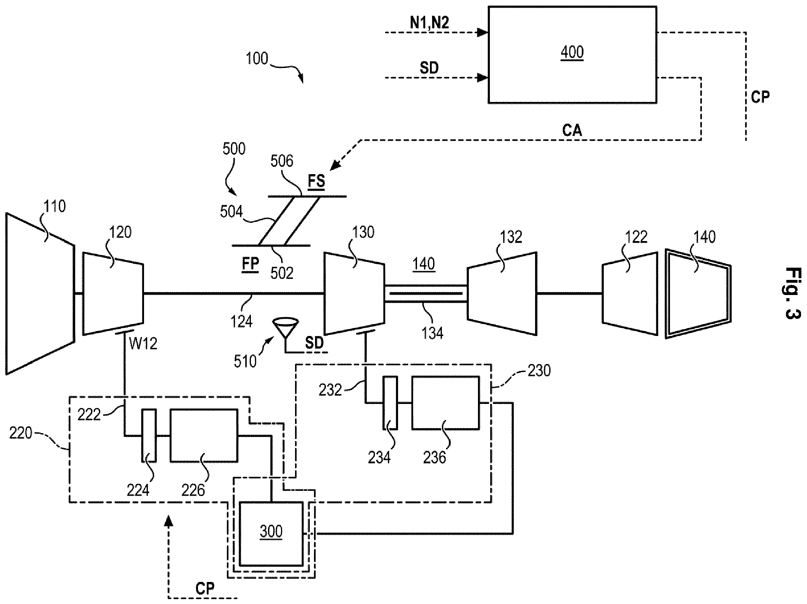

En se référant à la **figure 3****,** on voit de façon générique une veine primaire d'une turbomachine 100 double corps double flux à soufflante, ainsi qu'une portion d'une veine secondaire.

Elle comprend classiquement, d'amont en aval dans le sens de l'écoulement des gaz, une soufflante 110, un compresseur basse pression 120, un compresseur haute pression 130, une chambre de combustion 140, une turbine haute pression 132, une turbine basse pression 122 et une tuyère primaire d'échappement 140. Le compresseur BP (ou *booster*) 120 et la turbine BP pression 122 sont reliés par un arbre basse pression 124 et forment ensemble un corps basse pression BP. Le compresseur HP 130 et la turbine 132 sont reliés par un arbre haute pression 134 et forment ensemble, avec la chambre de combustion 140, un corps haute pression HP.

La soufflante 110, qui est entraînée, soit directement, soit par l'intermédiaire d'un réducteur, par l'arbre BP 124, comprime l'air issu de la manche d'entrée d'air. Cet air se divise en aval de la soufflante entre un flux d'air secondaire FS qui est dirigé directement vers une tuyère secondaire par laquelle il est éjecté pour participer à la poussée fournie par le moteur, et un flux dit primaire FP qui pénètre dans le générateur de gaz, constitué par les corps BP et HP puis qui est éjecté dans la tuyère primaire 140. L'invention couvre également le cas où les deux flux, primaire et secondaire sont mélangés avant éjection.

De la puissance mécanique est prélevée sur les arbres 124, 134, par exemple en prise directe ou au travers de prises de mouvement ou via un réducteur si le moteur en possède un.

En ce qui concerne le corps BP, une puissance W12 est prélevée, c'est-à-dire récupérée, par un système de prélèvement de puissance BP 220, au travers d'une prise de mouvement 222 (ou en prise directe), que ce soit au niveau du compresseur BP 120, de la turbine BP 122, ou à tout autre endroit sur l'arbre BP 124.

Cette prise de mouvement 222 peut déboucher sur un réducteur 224 qui est lui-même relié à un générateur électrique 226 qui transforme l'énergie W12 reçue en énergie électrique.

Celle-ci peut, comme cela est représenté sur la **figure** 3, être stockée dans un moyen de stockage électrique 300 ou bien envoyée directement, par un moteur électrique d'injection de puissance, sur un des arbres du turboréacteur.

Le moyen de stockage électrique 300 peut classiquement être une batterie, par exemple du type lithium-ion, ou par exemple encore une super capacité. Une électronique de puissance sera généralement interfacée entre le générateur et le moyen de stockage électrique 300. De la même façon, une puissance W13 peut être prélevée sur le corps HP, par un système de prélèvement de puissance HP 230, que ce soit au niveau de la turbine ou à tout autre endroit de l'arbre HP 20. Elle est, là encore, extraite par une prise de mouvement HP 232 (ou en prise directe). Cette prise de mouvement 232 peut déboucher aussi généralement sur un réducteur 234 qui est lui-même relié à un générateur électrique 236 qui transforme l'énergie W13 reçue en énergie électrique.

De même que précédemment le réducteur 234 est relié à un générateur électrique 236 qui transforme l'énergie mécanique W13 reçue en énergie électrique.

Celle-ci peut, comme cela est représenté sur la **figure 3****,** être stockée dans le moyen de stockage électrique 300, qui peut être le même que pour l'énergie W12.

Dans un mode de réalisation, les générateurs 226, 236 sont distincts, et préférablement logés à différents endroits axialement et/ou circonférentiellement de la turbomachine. Toutefois, il est possible, par le biais de différentiel ou de couplage, d'utiliser un unique générateur qui peut prélever sur le corps BP ou le corps HP.

La turbomachine 100 comprend en outre un calculateur 400 configuré pour recevoir des données de capteurs, des instructions pilote, des consignes, etc. pour les traiter et pour émettre des consignes, des informations, etc. Le calculateur 400 est généralement un calculateur principal embarqué, de type FADEC (*Full Authority Digital Engine Control*) qui fait l'interface entre le cockpit de l'aéronef et la turbomachine 100. Le calculateur principal de type FADEC est embarqué sur l'ensemble propulsif qui comprend la turbomachine. Il est par exemple installé dans un compartiment d'une nacelle entourant la turbomachine, mais il peut aussi être hors du périmètre de la turbomachine, comme dans le pylône ou le fuselage de l'aéronef. Il comprend un ou plusieurs processeurs et de la mémoire nécessaires au traitement des données. Alternativement, le calculateur 400 peut être distinct du calculateur principal de type FADEC. Alternativement, plusieurs calculateurs, dont un calculateur de bord FADEC sont prévus, et se partagent les actions.

Le prélèvement de puissance peut être activé ou désactivé sur consigne du calculateur 400. Pour cela, on suppose que les systèmes de prélèvement de puissance 220 et 230 disposent des moyens techniques adaptés, connus de l'homme du métier et non détaillés ici. Ces moyens peuvent consister en des embrayages, des couplages, des roues libres, etc., ou bien avoir un générateur en prise permanente avec de l'électronique de puissance qui pilote le prélèvement de puissance. Le prélèvement de puissance peut aussi être activé à différents niveaux : le système de prélèvement de puissance 220, 230 dispose d'électronique de puissance adaptée, connue de l'homme du métier.

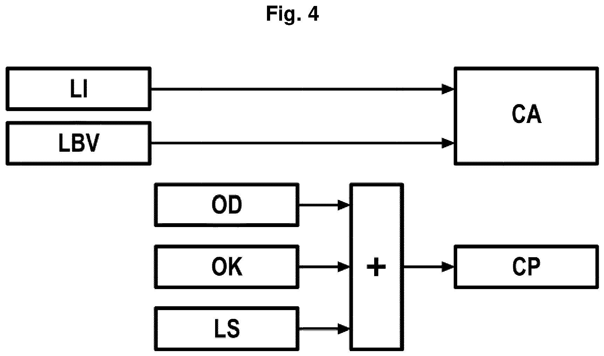

Le système de prélèvement de puissance BP 200 a pour fonction de ralentir le régime N1, c'est-à-dire le corps basse pression et plus spécifiquement le compresseur basse pression 120 afin d'éviter les risques de pompage. Pour cela, le système de prélèvement de puissance BP 200 reçoit une consigne de prélèvement CP du calculateur 400 qui a été généré en tenant compte du régime N1 du compresseur basse pression 120 et du régime N2 du compresseur haute pression 130, de sorte qu'on ait CP=f(N1, N2, t) où f représente une fonction et t le temps. La consigne de prélèvement CP tient aussi compte du Mach et la pression, si bien qu'on a CP =f(N1, N2, t, Mach, Pression). Cette loi est appelée LS sur la **figure 4****.**

Par ailleurs, on peut toujours tenir compte des informations OK et OD décrites en introduction.

Les données N1 et N2 peuvent être obtenues à partir de calculs ou d'estimation.

Plus spécifiquement, la consigne de prélèvement CP dépend des variations des régimes N1 et N2. On a alors CP = f(dN1/dt, dN2/dt, t, Mach, Pression) où f représente une fonction.

Dans un mode de réalisation particulier, la consigne de prélèvement CP est générée, pour une pression et un Mach donnés, dès qu'un écart entre dN1/dt et dN2/dt est supérieur à un certain seuil. On obtient alors un ralentissement de l'arbre BP sensiblement adapté à celui de l'arbre HP.

Les données dN1/dt et dN2/dt peuvent être calculées par le calculateur 400 ou, pour plus de réactivité, par un calculateur dédié (non représenté) au niveau du ou des générateurs.

On utilise ainsi le couple résistif du générateur 226 pour ralentir le compresseur BP 120. L'électricité produite par le générateur 226 peut être utilisée de différentes façons (stockage ou réinjection sur un autre arbre). Le document WO2016/020618 décrit différentes solutions.

L'utilisation du système VBV pour satisfaire l'opérabilité de la turbomachine n'est plus nécessaire. Ceci n'empêche pas que l'utilisation du système VBV peut rester nécessaire pour évacuer les débris.

Toutefois, la gestion de l'évacuation des débris n'est plus assurée. Pour cela, la turbomachine 100 comprend un système d'évacuation de débris 500 comprenant une porte 502 débouchant entre les deux compresseurs BP 120 et HP 130, une veine d'évacuation 504 et une sortie 506 qui débouche dans la veine secondaire. On dénombre une pluralité de portes 502 et de sorties 506 circonférentiellement autour de l'axe de la turbomachine. Le système d'évacuation de débris 500 peut être logé dans un carter intermédiaire.

Le système d'évacuation de débris peut structurellement être similaire à des VBV. En revanche, il n'est pas activé lors des mêmes phases.

Ces différentes phrases sont illustrées en **figure 4****,** comparativement à la **figure 2** de l'art antérieur.

Le système d'évacuation de débris 500 est piloté sur consigne du calculateur 400.

Un dispositif de détection de débris 510 est aussi prévu. La détection peut éventuellement être directe, par exemple à partir d'un système optoélectronique pour détecter des objets à partir d'une certaine taille entrant dans le compresseur BP et/ou s'accumulant à l'entrée du compresseur HP. Ce dispositif de détection 510 peut également réagir à un risque de présence de débris, par exemple en tenant compte de la pression régnant entre les deux compresseurs HP ou BP, ou bien d'autres paramètres qui sont modifiés en présence de débris. Par exemple, il peut détecter des conditions propices à l'apparition d'un pompage qui risquerait d'être provoqué par l'encombrement de l'entrée du compresseur HP. Le dispositif de détection de débris 510 génère un signal SD qui est envoyé au calculateur 400 quand un débris est détecté (ou suspecté).

Grâce à une loi d'ingestion LI implémentée, le calculateur 400 génère une consigne d'activation CA du système d'évacuation des débris uniquement lorsque le système de détection de débris détecte un débris. Cela signifie que le système d'évacuation de débris 500 est relativement peu utilisé par rapport à un système VBV classique. La sollicitation est moindre, tout comme l'usure.

Il peut arriver que la commande CP ne suffise pas à ralentir suffisamment le compresseur BP ou que le ralentissement du compresseur BP ne suffise pas à s'éloigner de la zone de pompage. Pour pallier cela, une loi de protection LPB du compresseur BP est implémentée : celle-ci génère une consigne d'activation CA du système d'évacuation des débris pour évacuer la surpression. Dans un mode de réalisation, le critère est un temps de latence compris entre 2s et 5s si l'application d'un couple résistif n'a pas l'effet attendu sur la marge de pompage.

Le système d'évacuation de débris 500 peut être de conception plus simple que des VBV. On peut par exemple citer les portes 502 qui peuvent être conçus pour être dans deux états uniquement : ouvertes ou fermées (tout ou rien). Similairement, les consignes générées par le calculateur 400 peuvent être binaires et correspondent ainsi soit à une porte ouverte soit à une porte fermée.

Dans un mode de réalisation particulier, l'invention peut être mise en oeuvre à partir d'une turbomachine existante comprenant un système de prélèvement BP et un système VBV.

L'invention peut aussi se caractériser comme un procédé comprenant une étape dans lequel on active le système VBV dans les conditions précitées pour le système d'évacuation de déchets 500. Le système VBV n'est donc généralement plus activé pour améliorer la marge au pompage, puisque cette fonction est remplie par l'activation du système de prélèvement de puissance dans les conditions précitées.

## Revendications

1. Turbomachine (1) double-flux avec une veine primaire et une veine secondaire, arrangée radialement externe à la veine primaire, ladite turbomachine (1) comprenant :
- un corps basse pression comprenant un compresseur basse pression (120) relié à une turbine basse pression (122) via un arbre basse pression (124),
- un corps haute pression comprenant un compresseur haute pression (130) relié à une turbine haute pression (132), via un arbre haute pression (134),
- un système de prélèvement de puissance basse-pression (220) comprenant un générateur électrique (226), configuré pour prélever de la puissance (W12) sur le corps basse pression, **caractérisée en ce que** :
- la turbomachine comprend un système d'évacuation de débris (500), situé entre les deux compresseurs (226, 236),
- le système de prélèvement de puissance basse pression (220) est configuré pour prélever de la puissance (W12) sur l'arbre basse pression (124) à l'aide du couple résistif du générateur électrique (226), sur consigne de prélèvement (CP) d'un calculateur (400), afin de faire ralentir le compresseur basse pression (120) et éviter un risque de pompage entre le compresseur haute pression (130) et le compresseur basse pression (120).

2. Turbomachine (100) selon la revendication 1, dans lequel le système d'évacuation de débris (500) est configuré pour être activé lors de l'ingestion de grêle ou d'eau, sur consigne d'un calculateur.

3. Turbomachine (100) selon la revendication 1 ou 2, comprenant en outre un dispositif de détection de débris (510) configuré pour détecter la présence de débris entre les deux compresseurs (120, 130), dans laquelle le système d'évacuation de débris (500) est configuré pour n'être activé que si le dispositif de détection de débris (510) détecte un débris, sur consigne d'un calculateur (400).

4. Turbomachine (100) selon l'une quelconque des revendications 1 à 3, dans lequel le prélèvement de puissance (W12) est configuré pour être contrôlé en fonction des régimes (N1, N2) du compresseur basse pression (120) et du compresseur haute pression (130), sur consigne d'un calculateur (400).

5. Turbomachine (100) selon la revendication 4, dans lequel le calculateur (400) contrôle le prélèvement de puissance (W12) en fonction des variations instantanées des régimes (dN1/dt, dN2/dt) du compresseur basse pression (120) et du compresseur haute pression (130).

6. Turbomachine (100) selon l'une quelconque des revendications 1 à 5, dans lequel le système d'évacuation de débris (500) comprend au moins une porte (502) adaptée pour être ouverte en tout ou rien.

7. Turbomachine (100) selon l'une quelconque des revendications précédentes, dans lequel le système d'évacuation de débris (500) est configuré pour être commandé en tout ou rien, sur consigne d'un calculateur (400).

8. Turbomachine (100) selon l'une quelconque des revendications 1 à 7, comprenant un calculateur dédié, distinct d'un calculateur principal (400) de la turbomachine, configuré pour contrôler le prélèvement de puissance (W12) en fonction des variations instantanées des régimes (dN1/dt, dN2/dt) du compresseur basse pression (120) et du compresseur haute pression (130), sur consigne du calculateur principal (400).

9. Turbomachine (100) selon l'une quelconque des revendications 1 à 8, dans lequel le système d'évacuation de débris (500) est configuré pour être commandé en tout ou rien, sur consigne d'un calculateur (400), en cas d'échec à préserver la marge au pompage à travers le système de prélèvement de puissance basse pression (W12), afin d'évacuer une surpression entre le compresseur basse pression (120) et le compresseur haute pression (130).

10. Ensemble propulsif pour aéronef, comprenant une turbomachine selon l'une quelconque des revendications 1 à 9 et un calculateur embarqué apte à générer ladite consigne de prélèvement (CP) afin de faire ralentir le compresseur basse pression (120).

## Patentansprüche

1. Doppelstrom-Turbomaschine (1) mit einem Primärstrom und einem Sekundärstrom, der radial außerhalb des Primärstroms angeordnet ist, wobei die Turbomaschine (1) Folgendes umfasst:
- einen Niederdruckkörper mit einem Niederdruckkompressor (120), der über eine Niederdruckwelle (124) mit einer Niederdruckturbine (122) verbunden ist,
- einen Hochdruckkörper mit einem Hochdruckkompressor (130), der über eine Hochdruckwelle (134) mit einer Hochdruckturbine (132) verbunden ist,
- ein Niederdruck-Leistungsentnahmesystem (220) mit einem elektrischen Generator (226), der so konfiguriert ist, dass er Leistung (W12) aus dem Niederdruckkörper entnimmt,
**dadurch gekennzeichnet, dass** :
- die Turbomaschine ein Trümmerbeseitigungssystem (500) umfasst, das sich zwischen den beiden Kompressoren (226, 236) befindet,
- das Niederdruck-Leistungsentnahmesystem (220) so konfiguriert ist, dass es mit Hilfe des Widerstandsmoments des elektrischen Generators (226) auf Anweisung zur Entnahme (CP) eines Rechners (400) Leistung (W12) von der Niederdruckwelle (124) entnimmt, um den Niederdruckkompressor (120) zu verlangsamen und eine Gefahr des Pumpens zwischen dem Hochdruckkompressor (130) und dem Niederdruckkompressor (120) zu vermeiden.

2. Turbomaschine (100) nach Anspruch 1, wobei das Trümmerbeseitigungssystem (500) so konfiguriert ist, dass es beim Verschlucken von Hagel oder Wasser auf Anweisung eines Rechners aktiviert wird.

3. Turbomaschine (100) nach Anspruch 1 oder 2, ferner umfassend eine Trümmererfassungsvorrichtung (510), die so konfiguriert ist, dass sie das Vorhandensein von Trümmern zwischen den beiden Kompressoren (120, 130) erfasst, wobei das Trümmerbeseitigungssystem (500) so konfiguriert ist, dass es nur dann aktiviert wird, wenn die Trümmererfassungsvorrichtung (510) auf Anweisung eines Rechners (400) ein Trümmerteil erfasst.

4. Turbomaschine (100) nach einem der Ansprüche 1 bis 3, wobei die Leistungsentnahme (W12) so konfiguriert ist, dass sie in Abhängigkeit von den Drehzahlen (N1, N2) des Niederdruckkompressors (120) und des Hochdruckkompressors (130) auf Anweisung eines Rechners (400) gesteuert wird.

5. Turbomaschine (100) nach Anspruch 4, wobei der Rechner (400) die Leistungsentnahme (W12) in Abhängigkeit von den momentanen Änderungen der Drehzahlen (dN1/dt, dN2/dt) des Niederdruckkompressors (120) und des Hochdruckkompressors (130) steuert.

6. Turbomaschine (100) nach einem der Ansprüche 1 bis 5, wobei das Trümmerbeseitigungssystem (500) mindestens eine Tür (502) umfasst, die so beschaffen ist, dass sie nur vollständig geöffnet oder vollständig geschlossen werden kann.

7. Turbomaschine (100) nach einem der vorhergehenden Ansprüche, wobei das Trümmerbeseitigungssystem (500) so konfiguriert ist, dass es auf Anweisung eines Rechners (400) ein-/ausgesteuert wird.

8. Turbomaschine (100) nach einem der Ansprüche 1 bis 7, mit einem dedizierten, von einem Hauptrechner (400) der Turbomaschine getrennten Rechner, der so konfiguriert ist, dass er die Leistungsentnahme (W12) in Abhängigkeit von den momentanen Änderungen der Drehzahlen (dN1/dt, dN2/dt) des Niederdruckkompressors (120) und des Hochdruckkompressors (130) auf Anweisung des Hauptrechners (400) steuert.

9. Turbomaschine (100) nach einem der Ansprüche 1 bis 8, wobei das Trümmerbeseitigungssystem (500) so konfiguriert ist, dass es auf Anweisung eines Rechners (400) ein- und ausgeschaltet wird, wenn es nicht gelingt, die Pumpmarge durch das Niederdruck-Leistungsentnahmesystem (W12) zu bewahren, um einen Überdruck zwischen dem Niederdruckkompressor (120) und dem Hochdruckkompressor (130) abzubauen.

10. Triebwerkseinheit für ein Flugzeug, mit einer Turbomaschine nach einem der Ansprüche 1 bis 9 und einem eingebauten Rechner, der die Anweisung zur Entnahme (CP) erzeugen kann, um den Niederdruckkompressor (120) zu verlangsamen.

## Claims

1. A bypass gas turbine engine (1) with a primary airflow and a secondary airflow, arranged radially external to the primary airflow, said gas turbine engine (1) comprising:
- a low-pressure spool comprising a low-pressure compressor (120) connected to a low-pressure turbine (122) via a low-pressure shaft (124),
- a high-pressure spool comprising a high-pressure compressor (130) connected to a high-pressure turbine (132), via a high-pressure shaft (134),
- a low-pressure power withdrawal system (220) comprising an electrical generator (226), configured to withdraw power (W12) from the low-pressure spool,
**characterized in that**:
- the gas turbine engine comprises a debris expulsion system (500), located between the two compressors (226, 236),
- the low-pressure power withdrawal system (220) is configured to withdraw power (W12) from the low-pressure shaft (124) using the resistive torque of the electrical generator (226), on a withdrawal command (CP) of an electronic control unit (400), to slow down the low-pressure compressor (120) and avoid the risk of a surge between the high-pressure compressor (130) and the low-pressure compressor (120).

2. The gas turbine engine (100) according to claim 1, wherein the debris expulsion system (500) is configured to be activated when hail or water is ingested, on command of an electronic control unit

3. The gas turbine engine (100) according to claim 1 or 2, further comprising a debris detection device (510) configured to detect the presence of debris between the two compressors (120, 130), wherein the debris expulsion system (500) is configured to only be activated if the debris detection device (510) detects debris, on command of an electronic control unit (400).

4. The gas turbine engine (100) according to any of claims 1 to 3, wherein the power withdrawal (W12) is configured to be controlled as a function of the ratings (N1, N2) of the low-pressure compressor (120) and of the high-pressure compressor (130), on command of an electronic control unit (400).

5. The gas turbine engine (100) according to claim 4, wherein the electronic control unit (400) controls the power withdrawal (W12) as a function of the instantaneous variations of the ratings (dN1/dt, dN2/dt) of the low-pressure compressor (120) and of the high-pressure compressor (130).

6. The gas turbine engine (100) according to any of claims 1 to 5, wherein the debris expulsion system (500) comprises at least one door (502) suitable for being opened in a go no-go arrangement.

7. The gas turbine engine (100) according to any of the previous claims, wherein the debris expulsion system (500) is configured to be controlled in a go no-go arrangement, on command of an electronic control unit (400).

8. The gas turbine engine (100) according to any of claims 1 to 7, comprising a dedicated electronic control unit, separate from a main electronic control unit (400) of the gas turbine engine, configured to control the power withdrawal (W12) as a function of the instantaneous variations of the ratings (dN1/dt, dN2/dt) of the low-pressure compressor (120) and of the high-pressure compressor (130), on command of the main electronic control unit (400).

9. The gas turbine engine (100) according to any of claims 1 to 8, wherein the debris expulsion system (500) is configured to be controlled in a go no-go arrangement, on command of an electronic control unit (400), in the event of a failure to maintain the surge margin through the low-pressure power withdrawal system (W12), to expel an overpressure between the low-pressure compressor (120) and the high-pressure compressor (130).

10. A propulsion assembly for an aircraft, comprising a gas turbine engine according to any of claims 1 to 9 and an on-board electronic control unit able to generate said withdrawal command (CP) to slow down the low- pressure compressor (120).
